# EUROPÄISCHE PATENTANMELDUNG

(11) **EP 3 689 554 A1**
(43) Veröffentlichungstag der Anmeldung: **05.08.2020**
(21) Anmeldenummer: 19154584.7
(22) Anmeldetag: 30.01.2019
(51) Int. Cl.: B25J 9/16

(54) **SCHONUNG EINES ROBOTERGELENKS DURCH EINE GEÄNDERTE BAHNTRAJEKTORIE**

(71) Anmelder: Siemens Aktiengesellschaft, 80333 München (DE)
(72) Erfinder: Allmaras, Moritz, 81673 München (DE); Brandstetter, Veronika, 81673 München (DE); Obst, Birgit, 80935 München (DE); Wever, Utz, 81539 München (DE); Bosco, Arianna, 80638 München (DE); Mauser, Hans, 81739 München (DE)

(57) **Zusammenfassung**

Die Erfindung betrifft ein Verfahren zur Steuerung der Bewegung eines Endeffektors (15) eines Roboters (10) mit dem Ziel, die Belastung eines Gelenks (12) des Roboters zu reduzieren. Der Roboter (10) weist zusätzlich zu dem Gelenk (12) mindestens ein weiteres Gelenk (14) und ein die beiden Gelenke (12, 14) verbindendes Verbindungsglied (13) auf. Das Verfahren umfasst eine Änderung der Trajektorie (20, 21) des Endeffektors (15) unter der Maßgabe, dass Anfangs- (A) und Endpunkt (B) der Trajektorie (20, 21) unverändert bleiben, die Belastung des Gelenks (12) jedoch reduziert wird. Die Erfindung betrifft des Weiteren ein Computerprogramm, umfassend Befehle, die bei der Ausführung des Programms durch einen Computer diesen veranlassen, dass er die Schritte eines der genannten Verfahren ausführt.

## Beschreibung

Die Erfindung betrifft ein Verfahren zur Steuerung der Bewegung eines Endeffektors eines Roboters mit dem Ziel, die Belastung eines Gelenks des Roboters zu reduzieren. Des Weiteren betrifft sie ein Computerprogramm, umfassend Befehle, die bei der Ausführung des Programms durch einen Computer diesen veranlassen, dass er die Schritte des genannten Verfahrens ausführt.

Die Fertigung und Montage mit Robotern ist ein fester Bestandteil vieler heutiger Produktionsverfahren. Roboter sind beispielsweise aufgrund ihres großen Arbeitsraums flexibler und günstiger einsetzbar als Werkzeugmaschinen. Die Roboter werden mit Sensoren hinsichtlich der Funktionsfähigkeit einzelner Komponenten überwacht. Meldet ein Roboter z.B. für ein Gelenk einen Fehler, wird der Roboter in der Regel aus der Fertigung genommen. Dadurch steht die Produktion an diesem Ort so lange still, bis der Roboter wieder funktionsfähig ist, d.h. bis das schadhafte Gelenk repariert ist. Dies ist in aller Regel mit finanziellen Einbußen für den Betreiber des Roboters verbunden.

Alternativ kann ein Ersatz-Roboter vorgehalten werden, um die Zeit des Produktionsstillstands zu minimieren. Die finanziellen Einbußen aufgrund des Ausfalls des Roboters lassen sich zwar dadurch reduzieren und begrenzen, allerdings wird durch die Bereitstellung von Ersatz-Robotern gewöhnlicherweise eine nicht unerhebliche Menge an finanziellem Kapital gebunden, das überdies abgeschrieben werden muss.

Bisher wird gewöhnlicherweise die erste oder zweite genannte Variante gewählt und deren jeweilige Nachteile in Kauf genommen.

Der vorliegenden Erfindung liegt die Aufgabe zugrunde, die Ausfallzeit eines Roboters aufgrund eines schadhaften Gelenks im Vergleich zum Stand der Technik zu reduzieren und dadurch die damit verbundenen finanziellen Aufwendungen zu reduzieren.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung und den Abbildungen.

Es wird ein Verfahren zur Steuerung der Bewegung eines Endeffektors eines Roboters mit dem Ziel vorgeschlagen, die Belastung eines Gelenks des Roboters zu reduzieren. Der Roboter weist zusätzlich zu dem Gelenk mindestens ein weiteres Gelenk und ein die beiden Gelenke verbindendes Verbindungsglied auf. Das Verfahren umfasst eine Änderung der Trajektorie des Endeffektors unter der Maßgabe, dass Anfangs- und Endpunkt der Trajektorie unverändert bleiben, die Belastung des Gelenks jedoch reduziert wird.

Die Erfinder haben erkannt, dass durch ein Ändern der Trajektorie des Endeffektors ein schadhaftes Gelenk des Roboters geschont werden kann und dadurch der Roboter unter Umständen bis zu einer Reparatur oder einem Austausch gegen einen Ersatz-Roboter weiterverwendet werden kann. Die Ausfallzeit des Roboters kann dadurch reduziert werden.

In der Regel ist die neue, geänderte Trajektorie für die zu erledigende Aufgabe des Roboters weniger ideal als die ursprüngliche Trajektorie. Beispielsweise ist der Energieverbrauch des Roboters, um den Endeffektor vom Anfangspunkt zu seinem Endpunkt zu bewegen, bei der geänderten Trajektorie größer als bei der ursprünglichen Trajektorie. Oder die Zeitdauer, die benötigt wird, um den Endeffektor vom Anfangs- zum Endpunkt zu bewegen, ist bei der geänderten Trajektorie länger als bei der ursprünglichen Trajektorie. Ein wichtiger Aspekt der Erfindung besteht darin, dass der beispielhaft genannte erhöhte Energieverbrauch des Roboters oder die gestiegene Zeitdauer - allgemein eine geringere Bearbeitungseffizienz - jedoch bei dem erfindungsgemäßen Verfahren bewusst in Kauf genommen wird, um einen kompletten Ausfall des Roboters zu vermeiden, der noch nachteiliger wäre.

Im Rahmen dieser Anmeldung wird unter einem Roboter eine universelle, programmierbare Maschine zur Handhabung, Montage oder Bearbeitung von Werkstücken verstanden. Ein Roboter in diesem Sinne wird auch als ein Industrieroboter bezeichnet. Ein Roboter weist in der Regel einen Roboterarm, ein oder mehrere Gelenke und einen Endeffektor auf. Der Roboterarm wird auch als Manipulator bezeichnet. Der Endeffektor wird auch als Werkzeug oder Greifer bezeichnet und dient zum Greifen oder Bearbeiten des Werkstücks. Ein weiterer Bestandteil des Roboters ist eine Steuerung, mithilfe derer insbesondere die Bewegungen der beweglichen Teile des Roboters gesteuert, das heißt vorgegeben, werden. Einmal programmiert ist ein programmierbarer Roboter in der Lage, einen Arbeitsablauf autonom durchzuführen, oder die Ausführung einer ihm gestellten Aufgabe abhängig von Sensorinformationen in vorgegebenen Grenzen zu variieren.

Ein wesentliches Merkmal, das der Roboter aufzuweisen hat, damit das erfindungsgemäße Verfahren zur Steuerung der Bewegung des Endeffektors durchgeführt werden kann, ist, neben dem einen Gelenk, mindestens ein weiteres Gelenk. So hat der Roboter mehrere Freiheitsgrade, die ausgenutzt werden können, wenn das eine Gelenk schadhaft ist und geschont werden muss.

Unter einem Gelenk ist im Rahmen dieser Patentanmeldung insbesondere ein technisches Gelenk zu verstehen. Ein technisches Gelenk ist eine in vorgegebener Art und Weise bewegliche Verbindung zwischen zwei starren Körpern. Die jeweilige Beweglichkeit eines Gelenks kann mit der in ihm stattfindenden Bewegungsform Rotieren (Drehgelenk) und/oder Verschieben (Schubgelenk) angegeben werden. Ein Gelenk wird auch als Lager bezeichnet. Ein Gelenk im Rahmen dieser Patentanmeldung umfasst insbesondere auch dessen Antrieb, sofern vorhanden. Der Antrieb dient dazu, die Bewegung der Gelenkkomponenten zueinander zu realisieren. Es sollen also mit dem vorgestellten Verfahren sowohl der Antrieb des Gelenks als auch dessen übrige Bestandteile geschont werden.

Unter einer Trajektorie, die auch als Bahntrajektorie oder Bahnkurve bezeichnet wird, wird der Verlauf der Raumkurve verstanden, entlang der sich ein Körper oder ein Punkt, beispielsweise der Schwerpunkt eines starren Körpers, bewegt. In der vorliegenden Anmeldung wird die Trajektorie des Endeffektors betrachtet. Abhängig von der konkreten Ausgestaltung des Endeffektors kann hierfür beispielsweise der Schwerpunkt des Endeffektors oder auch dessen distales Ende, insbesondere das Ende, das dem zu bearbeitenden Werkstück am nächsten ist, verwendet werden.

Aufgrund der mindestens zwei Gelenke und der daraus resultierenden mindestens zwei Freiheitsgrade des Roboters können derselbe Anfangs- und Endpunkt mit mehreren Trajektorien verbunden werden. Ist ein Gelenk einschließlich dessen Antrieb schadhaft, wird die Trajektorie so geändert, dass unter Beibehaltung des Anfangs- und Endpunktes die Belastung auf das schadhafte Gelenk reduziert wird - unter Inkaufnahme einer in der Regel verringerten Bearbeitungseffizienz.

Die Belastung des Gelenks kann durch eine Kraft auf das Gelenk charakterisiert und quantifiziert werden. In diesem Sinne bedeutet eine Verringerung der auf das Gelenk wirkenden Kraft auch eine Reduzierung der Belastung für das Gelenk.

Alternativ kann die Belastung des Gelenks auch durch ein Drehmoment auf das Lager charakterisiert und quantifiziert werden. Auch hier bedeutet eine Verringerung des Drehmoments eine Reduzierung an Belastung für das Gelenk bzw. dessen Antrieb.

Das vorgeschlagene Verfahren kann sowohl reaktiv, das heißt bei einer bereits erfolgten Schädigung des Gelenks, als auch präventiv, das heißt zur Vermeidung, dass es zu einer solchen Schädigung überhaupt kommt, eingesetzt werden.

Wird das Verfahren reaktiv eingesetzt, findet die Änderung der Trajektorie des Endeffektors vorteilhafterweise bei Erreichen oder Überschreiten eines vorbestimmten Schwellwertes eines ausgewählten Parameters des Gelenks statt. In anderen Worten wird in einem vorgelagerten Schritt ein Parameter ausgewählt, der das betreffende Gelenk charakterisiert, und es wird ein Schwellwert für den ausgewählten Parameter bestimmt, bei dessen Erreichen oder Überschreiten die Änderung der Trajektorie zu erfolgen hat.

In einem ersten Beispiel charakterisiert ein solcher Parameter den Materialabrieb am Gelenk. Ist ein gewisser Abrieb erfolgt, das heißt wurde eine gewisse Menge an Material am Gelenk abgerieben, ist dies in der Regel ein Indikator dafür, dass Materialverschleiß am Gelenk stattgefunden hat und ein Stillstand des Roboters aufgrund des verschlissenen Gelenks droht. Der Fachmann bestimmt - aufgrund seiner Erfahrung, wie stark derartige Gelenke beansprucht werden können, bis sie versagen - den Schwellwert geeignet aus. Hier kann, je nach Anwendungsfall und Präferenz des Betreibers des Roboters, ein eher niedrigerer, "konservativer" Schwellwert oder ein eher hoher, "riskanterer" Schwellwert gewählt werden.

In einem zweiten Beispiel charakterisiert der ausgewählte Parameter das Auftreten, das heißt das Vorhandensein, von Rissen am Gelenk. Die Rissbildung im Material des Gelenks ist ebenfalls ein Indikator für den Materialverschleiß am Gelenk und kann ebenfalls geeignet sein, den Zeitpunkt eines Stillstands des Roboters abzuschätzen. Auch hier ist es wiederum für den Fachmann in der Regel ein Leichtes, einen Schwellwert festzulegen, ab welcher Anzahl von Rissen oder ab welcher Häufigkeit der Bildung neuer Risse die Trajektorie des Endeffektors des Roboters zu ändern ist, um das betroffene Gelenk zu schonen.

Es hat sich herausgestellt, dass die Überwachung des das Gelenk charakterisierenden Parameters beispielsweise mittels einer Frequenzanalyse erfolgen kann. Hierbei werden vorteilhafterweise die Schwingungen im Gelenk analysiert. Überschreiten die Schwingungsamplituden einen vorbestimmten Schwellwert oder liegt ein Schwingungsfrequenzspektrum vor, dass sich außerhalb des Normalen bewegt, ist wiederum eine Änderung der Trajektorie des Endeffektors angezeigt.

Bei Erreichung bzw. Überschreitung des vorbestimmten Schwellwertes kann beispielsweise ein Hinweis an den Betreiber des Roboters auf die genannte Erreichung bzw. Überschreitung ergehen, gegebenenfalls verbunden mit einer Aufforderung, die Trajektorie des Endeffektors zu verändern.

Alternativ kann das Steuerungsverfahren des Roboters auch dergestalt ausgestaltet sein, dass mit der Erreichung bzw. Überschreitung des vorbestimmten Schwellwertes automatisch die Trajektorie des Endeffektors geändert wird.

Wird das Verfahren präventiv eingesetzt, findet die Änderung der Trajektorie des Endeffektors vorteilhafterweise bereits vor Inbetriebnahme des Roboters statt. Dies dient dem Zweck, dass bereits im Voraus die Belastung des Gelenks optimiert wird. Dabei kann die Belastung, oder Beanspruchung, des Gelenks minimiert werden. Eine minimale Belastung, also eine maximale Schonung, des Gelenks findet in der Regel dann statt, wenn gar keine Bewegung im Gelenk stattfindet. Da der Roboter notwendigerweise mehrere Gelenke aufweist, wird in diesem Fall die Bewegung des Endeffektors allein durch das bzw. die übrigen Gelenke realisiert.

Alternativ kann die Trajektorie des Endeffektors auch so gewählt werden, dass ein Kompromiss zwischen dem Verschleiß am Gelenk und der Bearbeitungseffizienz des Roboters realisiert wird.

Schließlich wird im Rahmen dieser Erfindung ein Computerprogramm vorgeschlagen, welches Befehle umfasst, die bei der Ausführung des Programms durch einen Computer diesen veranlassen, dass er die Schritte eines der genannten Verfahren ausführt.

Nachfolgend wird die Erfindung anhand eines Ausführungsbeispiels unter Bezugnahme auf die angehängten Zeichnungen beschrieben, in der
Fig. 1 einen Roboter mit einem Endeffektor und zwei Gelenken, und
Fig. 2 die Veränderung der Winkel der beiden Gelenke für zwei ausgewählte Trajektorien darstellt.

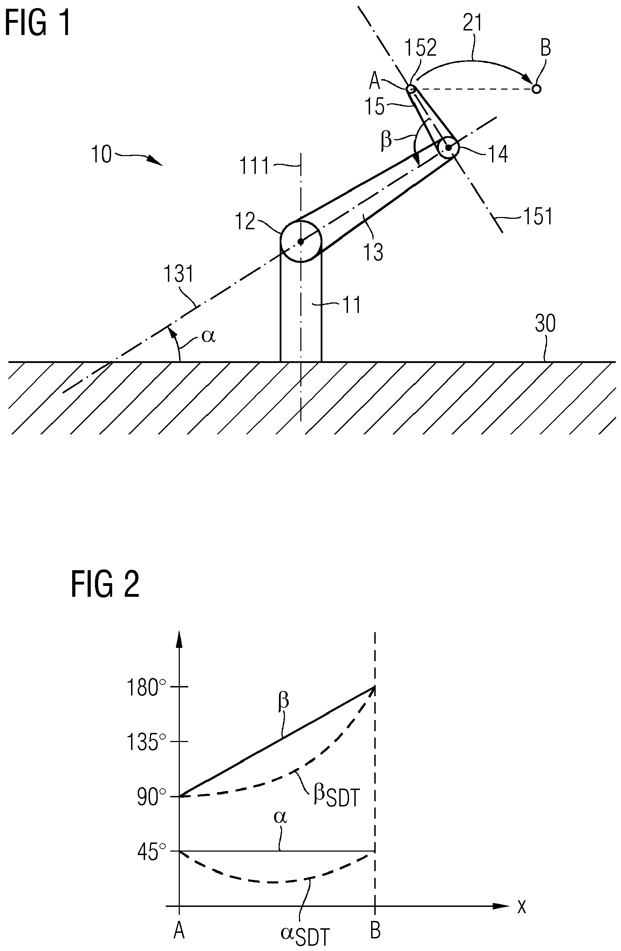

Die Fig. 1 illustriert schematisch einen Industrieroboter 10. Der Roboter 10 weist einen Standfuß 11 auf, mit dem er auf einem Boden 30 fest verankert ist. Der länglich ausgestaltete Standfuß 11 weist eine Längsachse 111 auf, die senkrecht zum Boden 30 angeordnet ist.

Alternativ ist das erfindungsgemäße Verfahren auch mit beweglichen Robotern, also mit Robotern, die sich während den ihnen zugewiesenen Arbeitsaufgaben relativ zu dem Boden bewegen, durchführbar.

Am dem Boden 30 entgegengesetzten Ende des Standfußes 11 weist der Roboter 10 ein Gelenk 12 auf. Das Gelenk 12 ist ein Drehgelenk, das Drehungen um eine Drehachse senkrecht zur Längsachse 111 des Standfußes 11 ermöglicht.

Das Gelenk 12 ist nicht nur mit einem Ende des Standfußes 11, sondern auch mit einem Ende eines Verbindungsglieds 13 verbunden. Das Verbindungsglied 13 ist ebenfalls länglich ausgestaltet und weist ebenfalls eine Längsachse 131 auf. Das Verbindungsglied 13 kann auch als Roboterarm oder Manipulator bezeichnet werden.

Am dem Gelenk 12 entgegengesetzten Ende weist das Verbindungsglied 13 ein weiteres Gelenk 14 auf. Auch dieses weitere Gelenk 14 ist als ein Drehgelenk ausgestaltet. Es ermöglicht Drehungen um eine Drehachse senkrecht zur Längsachse 131 des Verbindungsglieds 13.

Das weitere Gelenk 14 ist nicht nur mit einem Ende des Verbindungsgliedes 13, sondern auch mit einem Ende eines Endeffektors 15 verbunden. Der Endeffektor 15 ist ebenfalls länglich ausgestaltet und weist eine Längsachse 151 auf. Ist der Endeffektor so ausgestaltet, dass er Objekte greifen und von einem ersten Ort zu einem zweiten Ort transportieren kann, kann er auch als Greifer bezeichnet werden.

Die Bewegung des Endeffektors 15 wird mittels der Bewegung seines distalen Endes beschrieben. Unter dem distalen Ende wird hierbei derjenige Punkt des länglich ausgestalteten Endeffektors 15 bezeichnet, der dem mit dem weiteren Gelenk 14 verbundenen Ende entgegengesetzt ist. In anderen Worten kann das distale Ende des Endeffektors 15 mit demjenigen Punkt beschrieben werden, der dem zu greifenden Objekt (in Fig. 1 nicht dargestellt) am nächsten ist. Das distale Ende des Endeffektors 15 ist in der Fig. 1 mit dem Referenzzeichen 152 gekennzeichnet.

Die Drehung des Gelenks 12 ist in dem vorliegenden Ausführungsbeispiel mit dem Drehwinkel α gekennzeichnet. Der Drehwinkel α beschreibt den Winkel zwischen dem (als eben angenommenem) Boden 30 und der Längsachse 131 des Verbindungsglieds. Er beträgt 0°, wenn die Längsachse 131 parallel zum Boden 30 ist und das Verbindungsglied 13, wie in Fig. 1, nach rechts zeigt. Der Drehwinkel α beträgt 90°, wenn die Längsachse 131 senkrecht zum Boden 30 ist und das Verbindungsglied 13, übertragen auf die Fig. 1, nach oben zeigt.

Der Drehung des weiteren Gelenks 14 wird in dem vorliegenden Ausführungsbeispiel mit dem Drehwinkel β gekennzeichnet. Der Drehwinkel β beschreibt den Winkel zwischen der Längsachse 151 des Endeffektors 15 und der Längsachse 131 des Verbindungsglieds 13. Er beträgt 0°, wenn die Längsachse 151 des Endeffektors 15 parallel zur Längsachse 131 des Verbindungsglieds 13 ist und der Endeffektor 15, übertragen auf die Fig. 1, zum Gelenk 12 zeigt. Der Drehwinkel α beträgt 90°, wenn die Längsachse 151 des Endeffektors 15 senkrecht zur Längsachse 131 des Verbindungsglieds 13 ist und der Endeffektor 15, wie in Fig. 1, schräg nach oben zeigt.

Prinzipiell gibt es in der Regel für einen Roboter mit zwei Gelenken eine Vielzahl von Trajektorien, auf denen sich der Endeffektor von einem Anfangspunkt zu einem Endpunkt bewegen kann. In Fig. 1 ist gestrichelt diejenige Trajektorie 20 gezeigt, auf der der Endeffektor 15 - genauer gesagt, dessen distales Ende 152 - sich auf dem kürzesten Weg von einem vorgegebenen Anfangspunkt A zu einem vorgegebenen Endpunkt B bewegt. Um diese Bewegung des Endeffektors 15 zu realisieren, müssen sich das Verbindungsglied 13 und der Endeffektor 15 um das Gelenk 12 bzw. das weitere Gelenk 14 drehen. In anderen Worten müssen an beiden Gelenken 12, 14 Drehbewegungen durchgeführt werden, um die Trajektorie 20 des kürzesten Wegs zu realisieren.

Die Fig. 2 zeigt schematisch die Drehwinkel, die jeweils bei der Bewegung des Endeffektors vom Anfangs- zum Endpunkt auftreten. Auf der Abszissenachse ist der Weg x parallel zum Boden 30 (bezogen auf die Fig. 1) aufgetragen; auf der Ordinatenachse sind die Drehwinkel α, β des Gelenks 12 bzw. des weiteren Gelenks 14 aufgetragen. Analog zu dem in Fig. 1 gestrichelt dargestellten kürzesten Weg zwischen Anfangspunkt A und Endpunkt B sind in Fig. 2 die Verläufe der beiden entsprechenden Drehwinkel gestrichelt dargestellt. Da es sich bei der gestrichelten Trajektorie 20 um eine konventionelle, also bekannte, Trajektorie handelt, sind die entsprechenden Verläufe der Drehwinkel α_{SDT}, β_{SDT} mit dem Subskript "SDT" (= Stand der Technik) versehen.

Wie der Fig. 2 zu entnehmen ist, beträgt der Drehwinkel α_{SDT} am Anfangspunkt A ca. 45°, nimmt in der Folge in abnehmendem Maße ab, bevor er etwa in der Mitte zwischen dem Anfangspunkt A und dem Endpunkt B der Trajektorie in zunehmendem Maße zunimmt, um am Endpunkt B wiederum ca. 45° zu erreichen.

Der Drehwinkel β_{SDT} beträgt am Anfangspunkt A ca. 90° und nimmt in der Folge in zunehmendem Maße zu, bis er am Endpunkt B ca. 180° beträgt.

Dies bedeutet, dass sich beide Gelenke 12, 14 während der gesamten Trajektorie kontinuierlich bewegen. Nach tausend- und abertausendfacher Wiederholung derselben Bewegung von Anfangs- zu Endpunkt A, B ist es leicht ersichtlich, dass es am Gelenk 12 (und/oder am Gelenk 14) zu Verschleißerscheinungen kommen kann. Ist ein vorbestimmter Schwellwert eines Parameters, beispielsweise ein Materialabrieb oder Rissbildung am Gelenk 12, erreicht oder überschritten, wird aus diesem Grund die Trajektorie von ihrem ursprünglichem Verlauf 20 in einen neuen Verlauf 21 geändert.

Die geänderte Trajektorie 21 ist in Fig. 1 mit einer durchgezogenen Linie zwischen dem Anfangspunkt A und dem Endpunkt B dargestellt. Die geänderte Trajektorie 21 zeichnet sich gegenüber der ursprünglichen Trajektorie 20 dadurch aus, dass sich das Gelenk 12 überhaupt nicht bewegt, und die gesamte Ortsveränderung des Endeffektors 15 nur durch Drehung am weiteren Gelenk 14 realisiert wird.

Dies ist Fig. 2 anschaulich dargestellt. Die mit durchgezogener Linie gezeichneten Verläufe der Drehwinkel α, β zeigen, dass der Drehwinkel α während der gesamten Zeit konstant bei ca. 45° bleibt und nur der Drehwinkel β sich ändert, nämlich mit konstanter Rate von einem Wert von ca. 90° am Anfangspunkt A bis zu einem Wert von ca. 180° am Endpunkt B. Das Gelenk 12 wird dadurch, dass es sich während des gesamten angenommenen Arbeitsvorgangs nicht bewegt, geschont, so dass der Roboter dadurch möglicherweise bis zu einer Reparatur oder Austausch des betroffenen Gelenks in Betrieb bleiben kann.

Es ist zu betonen, dass das beschriebene Beispiel nur grob schematisch die tatsächlichen Bewegungen der Drehgelenke wiedergibt. Auch zeigt die geänderte Trajektorie 21 natürlich nur eine mögliche Variante; ebenso ist beispielsweise auch eine geänderte Trajektorie mit einer zwar noch vorhandenen, aber deutlich reduzierten Drehbewegung am Drehgelenk 12 denkbar.

Das obige Ausführungsbeispiel wurde anhand einer festgestellten Schädigung des Gelenks beschrieben, das anlässlich der Schädigung durch eine Änderung der Trajektorie bewusst geschont wird. Analog dazu ist auch eine präventive Schonung des besagten Gelenks denkbar. Gelangt man beispielsweise im Laufe einer Simulation der Bewegungen eines Roboters für eine bestimmte Arbeitsaufgabe zu der Erkenntnis, dass voraussichtlich ein bestimmtes Gelenk besonders stark beansprucht wird, kann anlässlich dieser Voraussage die Trajektorie derart geändert werden, dass das bestimmte Gelenk bewusst geschont wird, auch wenn unter Umständen dadurch die Bearbeitungseffizienz (Zeitdauer, Energieaufwand,...) reduziert wird.

Neben der Entlastung eines Gelenkes durch einfache Reduktion der Bewegung können weitere Eigenschaften über Modelle abgebildet werden, wie beispielsweise die Krafteinwirkung auf Gelenke aufgrund bestimmter Positionen oder aufgrund des Bearbeitungsprozesses. Mit Hilfe eines entsprechenden Optimierungsproblems können dann für diejenigen Gelenke, in denen besonders hohe Belastungen wirken, oder für Gelenke, die aufgrund anderer Umstände geschont werden sollen, dahingehend optimale Trajektorien definiert werden, die bestimmte Positionen vermeiden, oder geänderte Bewegungsrichtungen während der Bearbeitung durchführen. So kann der Roboter bereits präventiv genauso wie reaktiv seine Fertigungsprozesse gelenkschonend durchführen.

## Patentansprüche

1. Verfahren zur Steuerung der Bewegung eines Endeffektors (15) eines Roboters (10) mit dem Ziel, die Belastung eines Gelenks (12) des Roboters zu reduzieren, wobei der Roboter (10) zusätzlich zu dem Gelenk (12) mindestens ein weiteres Gelenk (14) und ein die beiden Gelenke (12, 14) verbindendes Verbindungsglied (13) aufweist, das Verfahren umfassend eine Änderung der Trajektorie (20, 21) des Endeffektors (15) unter der Maßgabe, dass Anfangs- (A) und Endpunkt (B) der Trajektorie (20, 21) unverändert bleiben, die Belastung des Gelenks (12) jedoch reduziert wird.

2. Verfahren nach Anspruch 1,
wobei die Trajektorie (20, 21) des Endeffektors (15) geändert wird, wenn ein ausgewählter Parameter des Gelenks (12) einen vorbestimmten Schwellwert erreicht oder überschreitet.

3. Verfahren nach Anspruch 2,
wobei der Parameter einen Materialabrieb am Gelenk (12) charakterisiert.

4. Verfahren nach Anspruch 2,
wobei der Parameter ein Auftreten von Rissen am Gelenk (12) charakterisiert.

5. Verfahren nach einem der Ansprüche 2 bis 4,
wobei das Erreichen bzw. Überschreiten des Schwellwertes mittels einer Frequenzanalyse bestimmt wird.

6. Verfahren nach einem der Ansprüche 2 bis 5,
wobei die Trajektorie (20, 21) des Endeffektors (15) bei Erreichen bzw. Überschreiten des Schwellwertes automatisch geändert wird.

7. Verfahren nach Anspruch 1,
wobei die Änderung der Trajektorie (20, 21) vor Inbetriebnahme des Roboters (10) erfolgt, um präventiv eine Belastung des Gelenks (12) zu optimieren.

8. Verfahren nach einem der vorhergehenden Ansprüche,
wobei die Belastung des Gelenks (12) durch die Kraft oder das Drehmoment auf das Gelenk (12) quantifiziert wird.

9. Verfahren nach einem der vorhergehenden Ansprüche,
wobei sich das Gelenk (12) während der Bewegung des Endeffektors (15) auf der geänderten Trajektorie (21) nicht bewegt.

10. Computerprogramm, umfassend Befehle, die bei der Ausführung des Programms durch einen Computer diesen veranlassen, dass er die Schritte des Verfahrens nach einem der vorhergehenden Ansprüche ausführt.
